# EUROPÄISCHE PATENTSCHRIFT

(11) **EP 3 967 158 B1**
(45) Veröffentlichungstag und Bekanntmachung des Hinweises auf die Patenterteilung: **09.08.2023**
(21) Anmeldenummer: 21195401.1
(22) Anmeldetag: 07.09.2021
(51) Int. Cl.: A23P 30/20

(54) **VERFAHREN UND VORRICHTUNG ZUM 3D-DRUCKEN VON LEBENSMITTELPRODUKTEN**
METHOD AND DEVICE FOR 3D PRINTING OF FOOD PRODUCTS
PROCÉDÉ ET DISPOSITIF PERMETTANT D'IMPRIMER EN 3D DES PRODUITS ALIMENTAIRES

(30) Priorität: 10.09.2020 DE 102020211412
(43) Veröffentlichungstag der Anmeldung: 16.03.2022
(73) Patentinhaber: Deutsches Institut für Lebensmitteltechnik e.V., 49610 Quakenbrück (DE)
(72) Erfinder: Lammers, Volker, 49610 Quakenbrück (DE); Leonhardt, Lars, 49610 Quakenbrück (DE); Schröder, Jens, 49610 Quakenbrück (DE); Müller, Josef, 49610 Quakenbrück (DE)
(74) Vertreter: Taruttis, Stefan Georg

(56) Entgegenhaltungen:
- EP-A1- 3 270 716
- EP-B1- 3 270 716
- US-A1- 2017 295 816
- US-B1- 6 280 785

## Beschreibung

Die vorliegende Erfindung stellt ein Verfahren und eine zur Verwendung für das Verfahren geeignete Vorrichtung bereit, durch die aus Lebensmittelrohstoffen Lebensmittelprodukte hergestellt werden, die bevorzugt massiv sind bzw. keine Lufteinschlüsse aufweisen. Im Verfahren wird aus den Lebensmittelrohstoffen eine pumpfähige Masse hergestellt, bevorzugt kontinuierlich, die eine erhöhte Temperatur aufweist und unmittelbar anschließend auf einem Träger abgelegt wird und auf dem Träger kühlt und sich dadurch verfestigt. Bevorzugt bildet die vollständige Mischung aus den Rohstoffen die Masse und die Lebensmittelprodukte bestehen aus der Masse, so dass während des Verfahrens z.B. kein zugesetztes Wasser abgetrennt wird. Optional können die Lebensmittelprodukte im Anschluß an das Ablegen und Kühlen oberflächlich beschichtet und/oder erhitzt werden.

Das Verfahren hat den Vorteil, dass es aus einer Masse mit hohem Proteingehalt und optional geringem Stärkegehalt formstabile Lebensmittelprodukte auf einem Träger herstellt, der bevorzugt flach ist, z.B. ein Platte oder ein Förderband, und ohne Verwendung einer Hohlform zur Formung der pumpfähigen Masse abläuft.

### Stand der Technik

Die EP 3 524 068 A1 beschreibt einen Kolben, der mehlbasierten vorgefertigten Teig aus einem Zylinder presst und der erhaltene Faden im Anschluß an eine oberflächlicher Erwärmung mit Luft von 60 bis 90°C in mehreren Schichten übereinander abgelegt werden kann.

Die EP 3 270 716 B1 beschreibt ein Verfahren zur Herstellung eines Fleischersatz-Strangs durch Extrudieren einer Mischung aus maximal 4 Gew.-% Mehl, 40 bis 70 Gew.-% Wasser und 15 bis 35 Gew.-% Pflanzenprotein durch eine Kühldüse, wobei stromabwärts des Extrudereinlasses 2 bis 15 Gew.-% Öl und/oder Fett eingespeist werden.

Die US 6,280,785 B1 legt zum 3D-Drucken von Lebensmittelmasse einen Massestrang aus einem Dosierkopf in mehreren Schichten auf einen beweglichen Träger ab. Beispiele 1 bis 3 nennen auch ein Erhitzen der zu extrudierenden Massen auf 60 bis 70 °C.

Die WO 2015/020660 A1 beschreibt ein Verfahren zur Herstellung eines extrudierten Fleischersatzes, wobei eine extrudierte Masse vor dem Ablegen in zumindest zwei separate Teilströme aufgeteilt wird. Zumindest einer der Teilströme kann durch eine Pumpe geleitet werden. Die Temperatur der Masse kann auf eine Temperatur zwischen 20 und 180 °C eingestellt werden.

### Aufgabe der Erfindung

Die Aufgabe der Erfindung liegt darin, eine Vorrichtung und ein damit durchführbares Verfahren anzugeben, mit dem, bevorzugt kontinuierlich, aus Lebensmittelrohstoffen formstabile Lebensmittelprodukte hergestellt werden, ohne dass dabei eine Hohlform zur Formung eingesetzt wird. Bevorzugt soll das Verfahren aus Lebensmittelrohstoffen kontinuierlich und ohne zwischenzeitliche Lagerung formstabile Lebensmittelprodukte herstellen, die bevorzugt massiv sind bzw. keine Lufteinschlüsse aufweisen, und die Vorrichtung soll zur Verwendung für das Verfahren geeignet sein. Weiter bevorzugt soll das Verfahren formstabile Lebensmittelprodukte in fertiger Form herstellen, z.B. ohne eine das Lebensmittelprodukt umfassenden Formausnehmung und ohne die Lebensmittelprodukte zu schneiden.

### Beschreibung der Erfindung

Die Erfindung löst die Aufgabe mit den Merkmalen der Ansprüche 1 und 4.

Die Mischung bzw. die gegarte Masse besteht, abzüglich des oberflächlich abdampfenden Wassers. Dabei hat sich gezeigt, dass die gegarte Masse nach Abkühlen auf Raumtemperatur in Raumluft nur geringe bis keine Gewichtsverluste durch abdampfendes Wassers aufweist. Optional kann das Lebensmittelprodukt anschließend oberflächlich beschichtet und/oder oberflächlich erwärmt werden, z.B. durch Heißluftbehandlung oder Frittieren.

Da die gegarte Masse bei einer Temperatur von maximal 100°C, bevorzugt unterhalb von 100°C aus dem Auslass des Extrudergehäuses oder aus einer daran angeschlossenen temperierten Leitung austritt und auf dem Träger abgelegt wird, besteht auch das Lebensmittelprodukt aus der Masse mit im Wesentlichen demselben Wassergehalt.

Es hat sich gezeigt, dass eine Mischung bzw. daraus im Extruder erzeugte gegarte Masse bei der Austrittstemperatur auf dem Träger beim Ablegen entlang Bahnen zu aneinander angrenzenden Massestreifen ein formstabiles und kompaktes bzw. im Wesentlichen luftblasenfreies Lebensmittelprodukt ergibt. Dies wird darauf zurückgeführt, dass die gegarte Masse einen hohen Proteingehalt aufweist, z.B. einen Proteingehalt von 15 bis 50 Gew.-%. Die Mischung und die daraus im Extruder erzeugte gegarte Masse weist bevorzugt 15 bis 50 Gew.-% Protein, das bevorzugt pflanzliches Protein ist, 0 bis 5 Gew.-% Kohlenhydrate, die insbesondere pflanzliche Stärke sind, optional 0 bis 15 Gew.-% Zusatzstoffe und Rest Wasser, bevorzugt 85 bis 50 Gew.-% Wasser auf oder besteht daraus.

Die Zusatzstoffe sind z.B. aus der Gruppe ausgewählt, die Speisesalz, Aroma, Farbstoffe, Fette und Öle, Konservierungsmittel, Pflanzenfasern, Verdickungsmittel und Mischungen aus zumindest zweien dieser umfasst. Bevorzugt umfasst der Zusatzstoff kein Verdickungsmittel und die Mischung ist frei von Verdickungsmitteln, die natürliche und modifizierte Polysaccharide, z.B. Carrageen, Guargummi, Carboxymethylcellulose, Cellulose, Stärke, modifizierter Stärke, Johannisbrotkernmehl und Gelatine ausgewählt sind. Bevorzugt ist die Mischung frei von zugesetztem Glycerin und/oder Saccharose.

Wasserlösliche Zusatzstoffe können in Mischung mit dem pflanzlichen Protein und/oder in Mischung mit Wasser zugeführt werden, z.B. in das Einlassende des Extruders oder durch einen stromabwärts davon angeordneten Zuführstutzen. Zusatzstoffe können generell durch zumindest einen Zuführstutzen zugeführt werden, der stromabwärts des Einlassendes des Extruders angeordnet ist.

Pflanzliches Protein kann z.B. zumindest ein pflanzliches Proteinisolat, pflanzliches Proteinkonzentrat und/oder Pflanzenmehl sein, z.B. Kürbiskernmehl, Getreideprotein, insbesondere Haferprotein, Ackerbohnenprotein, Erbsenprotein, Sojaprotein oder Sonnenblumenprotein. Bevorzugt ist das pflanzliche Protein ein Mehl, Proteinkonzentrat oder Proteinisolat, z.B. aus Kürbiskernmehl, aus Ackerbohne, aus Erbse, aus Sonnenblume oder Proteinisolat aus Getreide, insbesondere aus Hafer.

Die Bestandteile der Mischung bzw. der gegarten Masse ergänzen sich mit Wasser zu 100 Gew.-%.

Erfindungsgemäß ist am Auslass des Extrudergehäuses eine Pumpe angeschlossen, die gesteuert ist, dass sie nur während des Ablegens von gegarter Masse für ein einzelnes Lebensmittelprodukt fördert und während einer relativen Bewegung des Trägers zum Auslass in einem Bereich des einzelnen Lebensmittelprodukts keine Masse fördert, und/oder während einer relativen Bewegung des Trägers zum Auslass zwischen Bereichen des Trägers, an denen Masse abgelegt wird, keine Masse fördert, um separate Lebensmittelprodukte zu erzeugen, bzw. um die Bildung von Fäden oder Tropfen zwischen separaten Lebensmittelprodukten zu unterbinden.

Fett und/oder Öl können flüssig oder fest in Mischung mit dem pflanzlichen Protein in das das Einlassende des Extrudergehäuses eingeführt werden oder separat vom pflanzlichen Protein durch einen stromabwärts des Einlassendes, optional stromaufwärts oder stromabwärts eines Zuführstutzens für Wasser angeordneten zweiten Zuführstutzen in das Extrudergehäuse eingeführt werden. Weiter optional kann fettlösliches Aroma, z.B. Fleischaroma, in Mischung mit Fett und/oder Öl zugeführt werden.

Das Extrudergehäuse ist beheizt, bevorzugt weist es einen mit einem Temperiermedium durchströmten Doppelmantel oder einen elektrisch beheiztes Gehäuse auf. Das Extrudergehäuse ist in zumindest einem Abschnitt, der bevorzugt unmittelbar vor dem Auslass angeordnet ist, beheizt, um die Masse auf eine Temperatur von 60 bis 100°C, bevorzugt 70 bis 95°C zu erwärmen, und weiter bevorzugt ist das Extrudergehäuse im Bereich des Einlassendes, weiter optional im Bereich eines optionalen Zuführstutzens für Wasser, auf eine Temperatur von unterhalb 60 °C oder unterhalb 50°C temperiert oder ist nicht temperiert bzw. weist keinen Doppelmantel auf.

Das Ablegen der gegarten Masse in unmittelbar aneinander angrenzenden Bahnen erfolgt mit einer Relativbewegung des Trägers zum Auslass des Extrudergehäuses bzw. der beheizten Leitung bei einer Geschwindigkeit, die für den austretenden Massestrom der gegarten Masse unmittelbar aneinander und in zumindest zwei Ebenen übereinander liegende Massestreifen erzeugt, die entlang ihrer Kontaktflächen miteinander fusionieren bzw. aneinander haften.

Das Verfahren hat den Vorteil, dass die Masse, aus der auf dem Träger Massestreifen abgelegt werden, die ohne Weiteres zu formstabilen Lebensmittelprodukten fusionieren, ohne weitere Bearbeitung durch Pressen oder Schneiden, unmittelbar zuvor und bevorzugt kontinuierlich aus ihren Bestandteilen hergestellt wird und dabei erhitzt wird. Dadurch kann das Verfahren auf Basis von Rohstoffen kontinuierlich ablaufen, ohne ein Zwischenerzeugnis zu speichern. Die Vorrichtung ist daher für ein Verfahren eingerichtet, das nicht erst eine Lebensmittelmasse erzeugt, die mit separaten Maschinen zur Formgebung geformt wird. Dabei sind mit dem erfindungsgemäßen Verfahren erhältliche formstabile Lebensmittelprodukte insbesondere bei 0 bis 100 °C, bevorzugt zwischen 20 °C und 95 °C formstabil, so dass sie z.B. durch Erhitzen in einer Bratpfanne, durch Mikrowellenbestrahlung, durch Infrarotbestrahlung oder durch Anlegen von elektrischem Strom erwärmt werden können und dabei im Wesentlichen ihre Form behalten.

Die zur Verwendung für das Verfahren geeignete Vorrichtung weist ein Extrudergehäuse auf, in dem zumindest eine angetriebene Schnecke angeordnet ist, mit einem Einlassende zur Einführung von Protein, einem in Förderrichtung gegenüberliegenden Auslass und zumindest einem Zuführstutzen für Wasser, zumindest einen stromabwärts des Zuführstutzens für Wasser angeordneten zweiten Zuführstutzen, z.B. für Fett und/oder Öl, wobei das Extrudergehäuse zumindest in einem unmittelbar an seinen Auslass angrenzenden Abschnitt eine Temperiereinrichtung, insbesondere einen von Temperiermedium durchströmbaren Doppelmantel aufweist, der eingerichtet ist, die Masse bei Drehung der zumindest einen Schnecke auf eine Temperatur von 60 bis 100°C zu erwärmen. Am Auslass des Extruders ist eine temperierte Leitung angeschlossen, die eingerichtet ist, die gegarte Masse bei der Temperatur zu halten, die sie beim Austritt aus dem Extrudergehäuse aufweist. Alternativ kann die temperierte Leitung temperiert sein, um die gegarte Masse auf eine Temperatur unterhalb der Temperatur zu kühlen, die die Masse beim Austreten aus dem Extrudergehäuse aufweist, z.B. die Masse auf eine Temperatur von unterhalb 10°C bis unterhalb 30 °C oder bis unterhalb 40 °C oder bis unterhalb 50°C von der Temperatur zu kühlen, die die Masse beim Austreten aus dem Extrudergehäuse aufweist.

Erfindungsgemäß ist zwischen der temperierten Leitung und dem Extrudergehäuse eine Pumpe angeschlossen, die gesteuert ist, gegarte Masse vom Extruder zu fördern, während die gegarte Masse in Massestreifen auf dem Träger abgelegt wird, und eingerichtet ist, keine Masse zu fördern, wenn sich der Träger von einer Stellung weg bewegt, an der ein Lebensmittelprodukt hergestellt worden ist. Der Extruder kann z.B. ein Einschneckenextruder sein, bevorzugt ein Doppelschneckenextruder oder ein Planetwalzenextruder.

Die Pumpe, die z.B. eine Zahnradpumpe ist, hat den Vorteil, dass sie nach einem Zeitraum, in dem sie keine Masse fördert, beim anschließenden Fördern gegarter Masse kontrolliert fördert, indem sie zur Förderung gesteuert ist. Dabei kann die zumindest eine Schnecke des Extruders zu derselben Umdrehungszahl oder einer verringerten Umdrehungszahl angetrieben sein, wenn die Pumpe keine Masse fördert und wenn sie Masse fördert. Dabei ist die verringerte Umdrehungszahl eine, bei der die zumindest eine Schnecke sich noch mit zumindest 100 Upm dreht, z.B. um 10 bis 50% der Umdrehungszahl reduziert, bei der sich die zumindest eine Schnecke beim Fördern der Pumpe dreht. Das fortgesetzte Drehen der zumindest einen Schnecke, insbesondere auch wenn die Pumpe gesteuert ist, nicht zu fördern, erhält die Eigenschaften der Masse im Extruder und verringert z.B. eine höhere thermische Belastung der Masse am Extrudergehäuse. Im Unterschied zu einer Pumpe hätte ein am Auslass des Extruders angeschlossenes Ventil den Nachteil, dass beim Öffnen im Anschluß an eine Unterbrechung des Austretens von gegarter Masse diese kurzfristig stoßartig und mit höherem Massestrom austritt als nach kontinuierlichem Austritt der Masse.

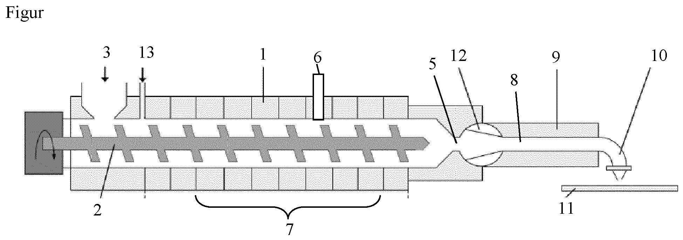

Das Verfahren und die Vorrichtung werden anhand eines Beispiels und mit Bezug auf die Figur erläutert, die schematisch
- die Vorrichtung im Längsschnitt durch einen Extruder zeigt.

Die Figur zeigt einen Extruder, in dessen Gehäuse 1 eine drehangetriebene Schnecke 2 angeordnet ist und das ein Einlassende 3 für Feststoffe, insbesondere Protein, optional in Mischung mit einem Anteil des Wassers der Mischung aufweist. In Förderrichtung der Schnecke 2 ist stromabwärts des Einlassendes 3 ein Zuführstutzen 13 am Gehäuse 1 angeschlossen, durch den flüssige Bestandteile der Mischung, insbesondere Wasser und/oder Fett oberhalb seiner Schmelztemperatur und/oder Öl eingeführt werden kann. Zwischen dem Zuführstutzen 13 und dem Auslass 5 ist ein optionaler zweiter Zuführstutzen 6 am Gehäuse 1 angeschlossen, z.B. zur Einführung von Fett und/oder Öl, optional in Mischung mit fettlöslichem Aroma.

Das Gehäuse weist als Temperiereinrichtung einen Doppelmantel 7 auf, der in separat mit Temperiermedium durchströmbare Abschnitte unterteilt ist.

Entsprechend einer optionalen Ausführungsform ist am Auslass 5 eine temperierbare Leitung 8 angeschlossen, die für die Temperierung einen mit Temperiermedium durchströmbaren Doppelmantel 9 aufweist. Durch diese Leitung 8 wird die Auslassöffnung 5 des Extrudergehäuses 1 verlagert, wobei durch die Temperierung die im Extruder erzeugte gegarte Masse kontrolliert bei einer Temperatur gehalten werden kann, die bei oder etwas unterhalb ihrer Austrittstemperatur aus dem Gehäuse 1 liegt. Zwischen der temperierbaren Leitung 8 und dem Auslass 5 des Extruders ist, wie generell bevorzugt, eine Pumpe 12 angeschlossen. Generell optional kann endständig an der Leitung 8 eine Düse 10 als Auslass angeordnet sein. Unterhalb des Auslasses, hier durch die Düse 10 gebildet, ist ein Träger 11 angeordnet, der in zwei, bevorzugt in 3 Dimensionen gesteuert verfahrbar ist, um die aus dem Auslass austretende gegarte Masse bei Bewegung des Trägers 11 entlang Bahnen in unmittelbar aneinander angrenzenden und in zumindest zwei Ebenen übereinander liegenden Massestreifen auf dem Träger 11 abzulegen.

### Beispiel: Herstellung eines formstabilen massiven Lebensmittelprodukts

Als pflanzliches Protein wurde Erbsenproteinisolat, ca. 85 Gew.-% Proteingehalt, zu 25 Gew.-% an der Mischung kontinuierlich in das Einlassende 3 eines

Doppelschneckenextruders eingeführt und Wasser zu 75 Gew.-% an der Mischung kontinuierlich durch einen stromabwärts des Einlassendes 3 angeschlossenen Zuführstutzen 13 eingeführt. Der Gesamtdurchsatz an Mischung durch den Extruder konnte im Bereich von 4 bis 20 kg/h eingestellt werden. Das Gehäuse 1 des Extruders wurde mittels eines Doppelmantels, der mit einem Wasser-Glykol-Gemisch durchströmt war, auf ca. 100 °C temperiert. Dieser temperierte Doppelmantel erstreckte sich zwischen dem Zuführstutzen 13 für Wasser und dem Auslass 5 des Extruders. Am Auslass 5 des Extruders war direkt eine temperierte doppelwandige Leitung 8 angeschlossen, deren Auslass als Düse 10 oberhalb eines in drei Dimensionen gesteuert verfahrbaren Tischs 11 angeordnet war. Der Doppelmantel der Leitung war auf ca. 95 bis 100 °C temperiert. Der Tisch 11 war so gesteuert, dass der aus dem Auslass 10 austretende Massestreifen durch eine Hin- und Herbewegung des Tischs 11 in direkt nebeneinander liegenden Massestreifen abgelegt wurde und darauf nochmals in einer oder zwei weiteren Schichten aus direkt nebeneinander liegenden Massestreifen. Diese Anordnung aus Massestreifen aus der gegarten Masse bildete das formstabile Lebensmittelprodukt. Dieses war kompakt bzw. wies im Wesentlichen keine Lufteinschlüsse auf. Die dem Träger 11 gegenüberliegende Oberfläche dieser Anordnung von Massestreifen zeigte eine Riffelung, die auf die dicht nebeneinander abgelegten und fusionierten Massestreifen zurückging.

## Patentansprüche

1. Verfahren zur Herstellung formstabiler Lebensmittelprodukte mit den Schritten
- Kontinuierliches Einführen aller Lebensmittelrohstoffe und Wasser in das Gehäuse (1) eines Extruders, in dem zumindest eine Schnecke (2) angeordnet ist,
- Drehen der zumindest einen Schnecke (2) in dem Gehäuse (1), um in dem Gehäuse (1) eine Mischung aus den Lebensmittelrohstoffen zu erzeugen,
- Temperieren des Gehäuses (1) in zumindest einem Abschnitt (7) vor dem Auslass (5) des Gehäuses (1) zur Erwärmung der Mischung auf zumindest 60°C bis maximal 110 °C, um aus der Mischung eine gegarte Masse zu erzeugen,
- Austreten der gegarten Masse aus dem Auslass (5) des Extrudergehäuses (1),
- Ablegen der gegarten Masse auf einem relativ zum Auslass gesteuert beweglichen Träger (11) in unmittelbar aneinander angrenzende Bahnen zu Massestreifen, die in zumindest zwei Ebenen übereinander liegen, um auf dem Träger (11) formstabile Lebensmittelprodukte herzustellen, wobei am Auslass (5) des Extrudergehäuses (1) eine temperierte Leitung (8) angeschlossen ist, die temperiert ist, um die gegarte Masse bei der Temperatur zu halten, die die Masse beim Austreten aus dem Extrudergehäuse (1) aufweist, wobei zwischen dem Auslass (5) des Extrudergehäuses (1) und der temperierten Leitung (8) eine Pumpe (12) angeschlossen ist, die gesteuert ist, nur während des Ablegens von gegarter Masse auf dem Träger (11) zu fördern und während einer relativen Bewegung des Trägers (11) zum Auslass (5) zwischen Bereichen des Trägers (11), an denen Masse abgelegt wird, keine Masse zu fördern, und die zumindest eine Schnecke (2) des Extruders zu einer geringeren Umdrehungszahl angetrieben ist, wenn die Pumpe (12) keine Masse fördert, als die Umdrehungszahl, zu der die zumindest eine Schnecke angetrieben ist, wenn die Pumpe (12) Masse fördert.

2. Verfahren nach Anspruch 1, **dadurch gekennzeichnet, dass**
am Einlassende (3) des Extrudergehäuses (1) als einer der Lebensmittelrohstoffe 15 bis 50 Gew.-% Protein eingeführt wird und das Wasser zu 50 bis 85 Gew.-%, jeweils auf die gesamte Mischung bezogen, in das Extrudergehäuse (1) eingeführt wird, wobei ein Anteil des eingeführten Wassers den Lebensmittelrohstoffen vor dem Einführen in das Einlassende (3) zugemischt werden kann,

3. Verfahren nach einem der voranstehenden Ansprüche, **dadurch gekennzeichnet, dass** der Träger (11) in dem Bereich, in dem gegarte Masse darauf abgelegt wird, eine ebene Oberfläche aufweist.

4. Vorrichtung zur Verwendung in einem Verfahren nach einem der voranstehenden Ansprüche, mit einem Extrudergehäuse (1), in dem zumindest eine angetriebene Schnecke (2) angeordnet ist, mit einem Einlassende (3) zur Einführung von Protein, einem in Förderrichtung gegenüberliegenden Auslass (5) und zumindest einem Zuführstutzen (13) für Wasser, zumindest einem stromabwärts angeordneten zweiten Zuführstutzen (6) zum Zuführen von Fett und/oder Öl, wobei das Extrudergehäuse (1) zumindest in einem unmittelbar an seinen Auslass (5) angrenzenden Abschnitt (7) eine Temperiereinrichtung aufweist, die eingerichtet ist, die Masse bei Drehung der zumindest einen Schnecke (2) auf eine Temperatur von 60 bis 100°C zu erwärmen, wobei am Auslass des Extruders eine temperierte Leitung (8) angeschlossen ist, die eingerichtet ist, die gegarte Masse bei der Temperatur zu halten, die sie beim Austritt aus dem Extrudergehäuse (1) aufweist und zwischen der temperierten Leitung (8) und dem Extrudergehäuse (1) eine Pumpe (12) angeschlossen ist, die gesteuert ist, gegarte Masse vom Extruder zu fördern, während die gegarte Masse in Massestreifen auf einem Träger (11) abgelegt wird, und eingerichtet ist, keine Masse zu fördern, wenn sich der Träger (11) von einer Stellung weg bewegt, an der ein Lebensmittelprodukt hergestellt worden ist, wobei ein in zumindest zwei Dimensionen gesteuert verfahrbarer Träger (11) unterhalb des Auslasses (10) der temperierten Leitung angeordnet ist, wobei die zumindest eine Schnecke (2) des Extruders zu einer geringeren Umdrehungszahl angetrieben ist, wenn die Pumpe (12) keine Masse fördert, als die Umdrehungszahl, zu der die zumindest eine Schnecke angetrieben ist, wenn die Pumpe (12) Masse fördert.

## Claims

1. Process for the production of dimensionally stable food products comprising the steps of
- continuously introducing all food raw materials and water into the housing (1) of an extruder in which at least one screw (2) is arranged,
- rotating the at least one screw (2) in the housing (1) to produce a mixture of the food raw materials in the housing (1),
- temperature controlling the housing (1) in at least one section (7) upstream of the outlet (5) of the housing (1) to heat the mixture to at least 60°C to a maximum of 110°C to produce a cooked mass from the mixture,
- discharging the cooked mass from the outlet (5) of the extruder housing (1),
- depositing the cooked mass on a carrier (11) which can be moved in a controlled manner relative to the outlet, in directly adjacent paths to form mass strips which lie one above the other in at least two planes, in order to produce dimensionally stable food products on the carrier (11), wherein a temperature-controlled line (8) is connected to the outlet (5) of the extruder housing (1), which line is temperature-controlled in order to keep the cooked mass at the temperature which the mass has when it is discharged from the extruder housing (1), wherein between the outlet (5) of the extruder housing (1) and the temperature-controlled line (8) a pump (12) is connected, which is controlled to convey only during the depositing of cooked mass on the carrier (11) and during a relative movement of the carrier (11) to the outlet (5) between areas of the carrier (11), the at least one screw (2) of the extruder is driven at a lower number of revolutions when the pump (12) is not conveying mass than the number of revolutions at which the at least one screw is driven when the pump (12) is conveying mass.

2. Method according to claim 1, **characterized in that**
at the inlet end (3) of the extruder housing (1), as one of the food raw materials, 15 to 50% by weight of protein is introduced, and the water is introduced into the extruder housing (1) at 50 to 85% by weight, each based on the total mixture, wherein a portion of the introduced water can be mixed with the food raw materials before introduction into the inlet end (3).

3. Method according to one of the preceding claims, **characterized in that** the carrier (11) has a flat surface in the area where cooked mass is deposited thereon.

4. Device for use in a process according to one of the preceding claims, comprising an extruder housing (1) in which at least one driven screw (2) is arranged, with an inlet end (3) for the introduction of protein, an outlet (5) opposite in the conveying direction and at least one feed nozzle (13) for water, at least one second feed nozzle (6) arranged downstream for feeding fat and/or oil, the extruder housing (1) having, at least in a section (7) directly adjacent to its outlet (5), a temperature-controlling which is arranged to heat the mass to a temperature of 60 to 100°C during rotation of the at least one screw (2), a temperature-controlling line (8) being connected to the outlet of the extruder and being arranged to keep the cooked mass at the temperature which it has on discharging from the extruder housing (1), and a pump (12) being connected between the temperature-controlled line (8) and the extruder housing (1), which pump (12) is controlled to convey cooked mass from the extruder while the cooked mass is being deposited in mass strips on a carrier (11) and is arranged not to convey mass when the carrier (11) moves away from a position at which a food product has been produced, wherein a carrier (11) movable in a controlled manner in at least two dimensions is arranged below the outlet (10) of the temperature-controlling line, wherein the at least one screw (2) of the extruder is driven to a lower number of revolutions when the pump (12) is not conveying mass than the number of revolutions at which the at least one screw is driven when the pump (12) is conveying mass.

## Revendications

1. Procédé de fabrication de produits alimentaires de forme stable comprenant les étapes suivantes
- introduire en continu toutes les matières premières alimentaires et l'eau dans le boîtier (1) d'une extrudeuse dans laquelle est disposée au moins une vis (2),
- rotation de la au moins une vis (2) dans le boîtier (1) afin de produire un mélange des matières premières alimentaires dans le boîtier (1),
- thermorégulation du boîtier (1) dans au moins une section (7) avant la sortie (5) du boîtier (1) pour chauffer le mélange à au moins 60°C et au maximum 110°C afin de produire une masse cuite à partir du mélange,
- sortie de la masse cuite par la sortie (5) du boîtier de l'extrudeuse (1),
- déposer la masse cuite sur un support (11) mobile de manière contrôlée par rapport à la sortie, en bandes de masse directement adjacentes les unes aux autres, qui sont superposées dans au moins deux plans, afin de fabriquer des produits alimentaires indéformables sur le support (11), pendant lequel une conduite tempérée (8) est raccordée à la sortie (5) du boîtier d'extrudeuse (1), laquelle est tempérée afin de maintenir la masse cuite à la température que présente la masse à la sortie du boîtier d'extrudeuse (1), et qu'entre la sortie (5) du corps d'extrudeuse (1) et la conduite tempérée (8) est raccordée une pompe (12) qui est commandée pour ne refouler que pendant le dépôt de la masse cuite sur le support (11) et pendant un mouvement relatif du support (11) vers la sortie (5) entre des zones du support (11), où la masse est déposée, et la au moins une vis (2) de l'extrudeuse est entraînée à une vitesse de rotation inférieure, lorsque la pompe (12) ne transporte pas de masse, à la vitesse de rotation à laquelle la au moins une vis est entraînée lorsque la pompe (12) transporte de la masse.

2. Procédé selon la revendication 1, **caractérisé en ce que**
à l'extrémité d'entrée (3) du corps de l'extrudeuse (1), 15 à 50 % en poids de protéines sont introduits comme l'une des matières premières alimentaires et l'eau est introduite dans le corps de l'extrudeuse (1) à raison de 50 à 85 % en poids, dans chaque cas par rapport au mélange total, une partie de l'eau introduite pouvant être mélangée aux matières premières alimentaires avant l'introduction dans l'extrémité d'entrée (3).

3. Procédé selon l'une des revendications précédentes, **caractérisé en ce que** le support (11) présente une surface plane dans la zone où la masse cuite est déposée sur celui-ci.

4. Dispositif destiné à être utilisé dans un procédé selon l'une des revendications précédentes, comprenant un boîtier d'extrudeuse (1) dans lequel est disposée au moins une vis sans fin entraînée (2), avec une extrémité d'entrée (3) pour l'introduction de protéines, une sortie (5) opposée dans la direction de transport et au moins une tubulure d'alimentation (13) pour l'eau, au moins une deuxième tubulure d'alimentation (6) disposée en aval pour l'alimentation en graisse et/ou en huile, le boîtier de l'extrudeuse (1) présentant, au moins dans une section (7) directement adjacente à sa sortie (5), un dispositif de tempérage qui est agencé pour chauffer la masse à une température de 60 à 100°C lors de la rotation de la au moins une vis sans fin (2), une conduite tempérée (8) étant raccordée à la sortie de l'extrudeuse, laquelle est agencée pour maintenir la masse cuite à la température, qu'elle présente à la sortie du boîtier de l'extrudeuse (1) et une pompe (12) est raccordée entre le conduit tempéré (8) et le boîtier de l'extrudeuse (1), laquelle pompe est commandée pour transporter la masse cuite de l'extrudeuse pendant que la masse cuite est déposée en bandes de masse sur un support (11) et est adaptée pour ne pas transporter de masse lorsque le support (11) s'éloigne d'une position dans laquelle un produit alimentaire a été fabriqué, dans lequel un support (11) pouvant être déplacé de manière contrôlée dans au moins deux dimensions est disposé en dessous de la sortie (10) du conduit tempéré, pendant lequel la au moins une vis (2) de l'extrudeuse est entraînée à une vitesse de rotation inférieure, lorsque la pompe (12) ne transporte pas de masse, à la vitesse de rotation à laquelle la au moins une vis est entraînée lorsque la pompe (12) transporte de la masse.
